# EUROPEAN PATENT APPLICATION

(11) **EP 2 545 980 A1**
(43) Date of publication of application: **16.01.2013**
(21) Application number: 11753177.2
(22) Date of filing: 22.02.2011
(51) Int. Cl.: B01D 53/26, D06F 58/28, F24F 11/02, F26B 21/00

(54) **DEHUMIDIFIER**

(30) Priority: 09.03.2010 JP 2010051912
(71) Applicant: Mitsubishi Electric Corporation, Tokyo 100-8310 (JP); Mitsubishi Electric Home Appliance Co., Ltd., Fukaya-shi, Saitama 369-1295 (JP)
(72) Inventor: AKAMATSU, Hisayuki, Fukaya-shi Saitama 369-1295 (JP); KABETA, Noriyoshi, Tokyo 102-0073 (JP); ARAI, Satoshi, Tokyo 102-0073 (JP); WAKAI, Hiroshi, Fukaya-shi Saitama 369-1295 (JP); SHIBATA, Hideo, Fukaya-shi Saitama 369-1295 (JP); UCHIDA, Tsuyoshi, Tokyo 100-8310 (JP)
(74) Representative: Ydreskog, Margareta
(86) International application number: PCT/JP2011/053765
(87) International publication number: WO 2011/111515

(57) **Abstract**

There is provided a dehumidifier capable of identifying the arrangement range of an object to be dried even when the humidity in a room is high. For this purpose, the dehumidifier includes a dehumidifying means 5 which removes moisture contained in room air A; an blowing fan 2 that draws in the room air A and blows out dry air B, which is obtained by causing the room air A to pass through the dehumidifying means 5, into the room; a humidity sensor 4 which detects the humidity in the room; a wind direction changing means 1 which changes a blowing direction of the dry air B; an infrared ray sensor 6 which detects the surface temperature of the washing in a non-contact state; and a control circuit 7 that detects the dried state of the washing from the surface temperature detected by the infrared ray sensor 6, and controls the wind direction changing means 1 according to the dried state thereof. Before the surface temperature of the washing is detected, the control circuit 7 judges whether or not the humidity in the room is higher than a predetermined humidity, and if the humidity in the room is higher than the predetermined humidity, the control circuit 7 controls a fan motor 2a and the wind direction changing means 1 so that the dehumidifying capability of the dehumidifying means 5 is at the maximum until the humidity in the room reaches the predetermined humidity.

## Description

### Technical Field

The present invention relates to a dehumidifier for eliminating moisture in a room and, more particularly, to a dehumidifier having a function of drying the washing, which is an object to be dried, that is hung to dry in the room.

### Background Art

In conventional dehumidifiers, control means compares the result of temperature detection by infrared detection means with the result of temperature detection of the indoor atmosphere by temperature detection means, whereby a judgment is made on a sensible heat decrease due to the evaporation of the moisture absorbed by an object to be dried, and the location of the distribution of temperatures lower than the room temperature due to a sensible heat decrease of the object to be dried is judged to be in the range of arrangement of the object to be dried (refer to Patent Literature 1, for example).

### Citation List

### Patent Literature

Patent Literature 1: Japanese Patent Laid-Open No. 2007-240100 (Claims, Figures 3 to 5)

### Summary of Invention

### Technical Problem

The above-described conventional dehumidifier has a problem that when the humidity in a room is high, it is difficult to identify the arrangement range of object to be dried because the decrease amount of sensible heat is small.

The present invention has been made to solve the above-described problem, and accordingly an object thereof is to provide a dehumidifier capable of identifying the arrangement range of object to be dried even when the humidity in the room is high.

### Means for Solving the Problems

A dehumidifier according to the present invention, which comprises dehumidifying means which removes moisture contained in the air; and air blowing means which draws in room air and blows out dry air, which is obtained by causing the room air to pass through the humidifying means, into a room, comprises: wind direction changing means which changes a blowing direction of the dry air; humidity detection means which detects the humidity in the room; surface temperature detection means which detects the surface temperature of an object to be dried in a non-contact state; and control means which detects the dried state of the object to be dried from the surface temperature detected by the surface temperature detection means, and controls the wind direction changing means according the dried state; wherein, before the surface temperature of the object to be dried is detected, the control means judges whether or not the humidity in the room is higher than a predetermined humidity, and if the humidity in the room is higher than the predetermined humidity, the control means controls at least the air blowing means so that the dehumidifying capability of the dehumidifying means is at the maximum until the humidity in the room reaches the predetermined humidity.

### Advantageous Effect of Invention

According to the present invention, before the surface temperature of the object to be dried is detected, when the humidity in the room is higher than the predetermined humidity, the control means controls at least the air blowing means so that the dehumidifying capability of the dehumidifying means is at the maximum until the humidity in the room reaches the predetermined humidity. Thereby, the humidity in the air in the room is decreased, and therefore, the difference between the surface temperature of the object to be dried detected by the surface temperature detection means and the surface temperature in the room at the periphery thereof becomes clear, so that the arrangement range of the object to be dried can be identified exactly. Therefore, the object to be dried can be dried efficiently.

### Brief Description of the Drawings

Figure 1 is an appearance perspective view showing a dehumidifier of an embodiment.
Figure 2 is a schematic configuration view showing the inside of the dehumidifier of the embodiment.
Figure 3 is a schematic perspective view enlargedly showing wind direction changing means shown in Figure 1.
Figure 4 is a schematic view showing the detection range of an infrared ray sensor of the dehumidifier of the embodiment.
Figure 5 is a flowchart showing the action at the time when the mode of the dehumidifier of the embodiment is the dry mode.

### Description of Embodiment

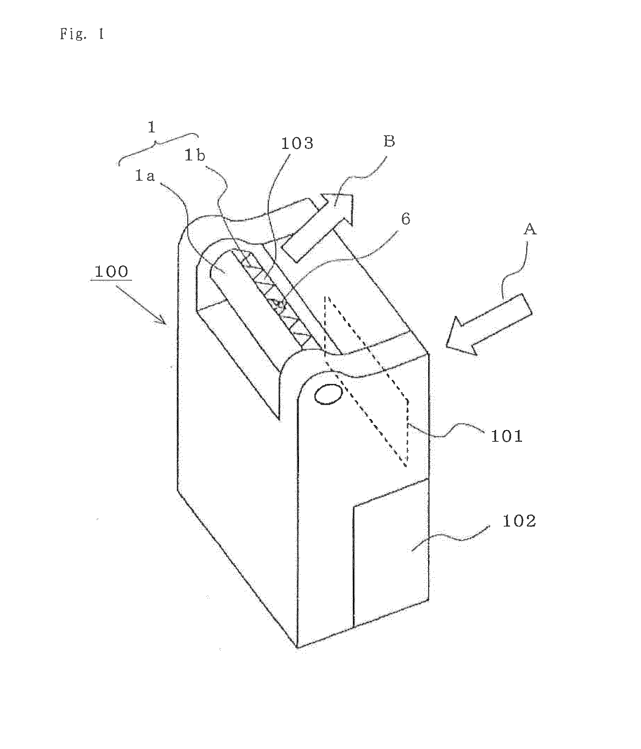

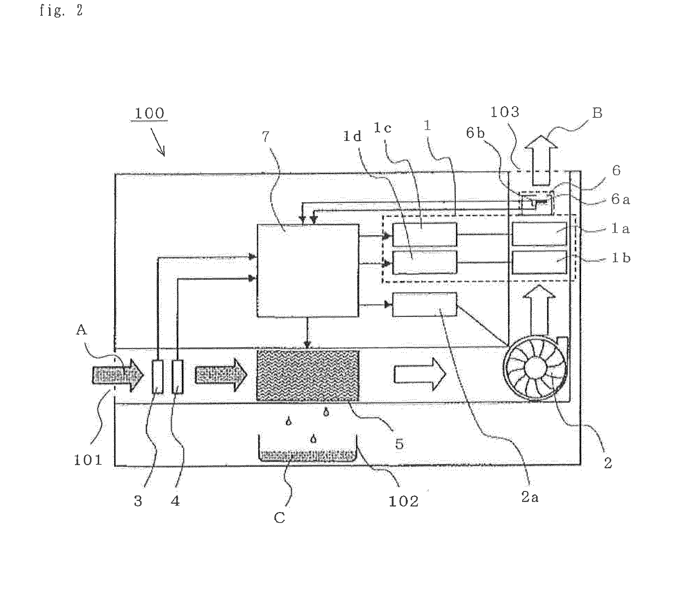

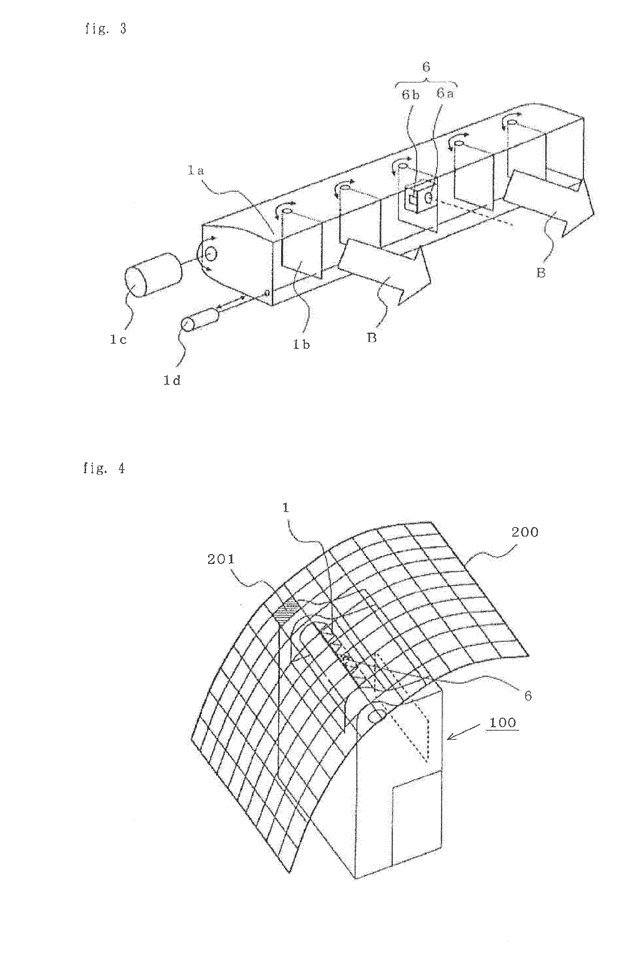

Figure 1 is an appearance perspective view showing a dehumidifier of an embodiment, Figure 2 is a schematic configuration view showing the inside of the dehumidifier of the embodiment, Figure 3 is a schematic perspective view enlargedly showing wind direction changing means shown in Figure 1, and Figure 4 is a schematic view showing the detection range of an infrared ray sensor of the dehumidifier of the embodiment.

As shown in Figure 1, the dehumidifier of this embodiment includes a dehumidifier cabinet 100 configured so as to be capable of self-standing, an air intake port 101 for taking room air A in the dehumidifier cabinet 100, a water storage tank 102 which stores water removed from the air taken in through the air intake port 101, and an air outlet port 103 which discharges the moisture-removed dry air B from the dehumidifier cabinet 100 into a room. The air outlet port 103 is composed of a wind direction changing means 1 which can change the wind direction of the dry air B. The wind direction changing means 1 includes a longitudinal louver 1a which changes the vertical wind direction and a lateral louvers 1b which change the horizontal wind direction. The water storage tank 102 is detachably mounted to the dehumidifier cabinet 100.

As shown in Figure 2, the above-described dehumidifier is provided with an blowing fan 2 that generates an airflow that draws in the room air A through the air intake port 101 and discharges the dry air B through the air outlet port 103, a fan motor 2a which rotates the blowing fan 2, a temperature sensor 3 which detects the temperature of the room air A drawn in through the air intake port 101, a humidity sensor (humidity detection means) 4 which detects the humidity of the room air A, a dehumidifying means 5 which generates the dry air B by removing the moisture contained in the room air A, a longitudinal direction changing motor 1c which changes the longitudinal louver 1a in the vertical direction, a lateral direction changing motor 1d which changes the lateral louvers 1b in the horizontal direction, an infrared ray sensor 6 that is a surface temperature detection means, and a control circuit 7 having a control means.

It is necessary only that the dehumidification means 5 be capable of condensing the moisture in the air by removing the moisture, and for example, as the most common means, there are used the method which involves constituting a heat pump circuit and condensing the moisture in the air in a vaporizer and the desiccant method which involves condensing the moisture in the air removed by an adsorbent by use of a heat exchanger. The moisture removed from the room air A by the dehumidification means 5 is stored in the water storage tank 102 as the condensate water C.

As shown in Figure 3, the longitudinal louver 1a has a rectangular opening extending in the width direction of the dehumidifier cabinet 100 and is constructed so that the direction thereof can be changed vertically with the rotating shaft of the above-described longitudinal direction changing motor 1c substantially as an axis. The lateral louvers 1b are arranged at equal intervals in the longitudinal louver 1a, are pivotally supported by the inner portions on the side opposite to the opening of the longitudinal louver 1a so that the directions thereof can be changed in the horizontal direction, and are configured so as to be moved in association with the drive of the above-described lateral direction changing motor 1d.

The infrared ray sensor 6 is installed on one side of the lateral louver 1b arranged approximately in the center in the transverse direction in the longitudinal louver 1a. Thereby, the detection range of surface temperature detected by the infrared ray sensor 6 is made almost equal to the direction of the dry air B changed by the wind direction changing means 1. That is, the infrared ray sensor 6 can detect the surface temperature of the whole region in the range in which the wind direction changing means 1 can blow air.

As the above-described infrared ray sensor 6, for example, a sensor that utilizes the thermo-electromotive force effect has been used. The infrared ray sensor 6 includes an infrared ray absorbing film 6a that receives heat radiation (infrared rays) generated from the surface of a predetermined region, and a thermistor 6b for detecting the temperature of the infrared ray absorbing film 6a (refer to Figures 2 and 3). This infrared ray sensor 6 converts the difference between the temperature of the thermosensible portion of the infrared ray absorbing film 6a, which is raised by the absorption of heat radiation (hot contact point), and the temperature of the infrared ray absorbing film 6a, which is detected by the thermistor 6b (cold contact point), into an electrical signal such as a voltage, and sends the electrical signal to the control circuit 7 described later. From the magnitude of this electrical signal, the surface temperature of the predetermined region can be judged.

Herein, the method for detecting the surface temperature of the predetermined region is explained with reference to Figure 4.
As shown in Figure 4, in the case where the whole region in which the infrared ray sensor 6 can make detection is taken as a whole scanning range 200, the whole scanning range 200 is a plane-shaped range expanding in the transverse direction (the horizontal direction) and the longitudinal direction (the vertical direction). The infrared ray sensor 6 is controlled so as to detect the surface temperature of each divided area 201 obtained by dividing the whole scanning range 200 into plural numbers in the horizontal direction and the vertical direction. Thereby, a detailed temperature map can be prepared for a wide-ranging region.

When the selection of an ordinary dehumidification mode from an operating switch of an operation section, which is not shown, has been detected, the above-described control circuit 7 permits blowing from the air outlet port 103 by driving the longitudinal direction changing motor 1c and lateral direction changing motor 1d of the wind direction changing means 1, rotates the blowing fan 2 by driving the fan motor 2a, and drives the humidification means 5. After that, the control circuit 7 changes the direction of the louvers 1a, 1b by controlling the longitudinal direction changing motor 1c and lateral direction changing motor 1d of the wind direction changing means 1 so that the dry air B is blown in the direction of a desired region in the room. As a result of this, the room air A is taken from the air intake port 101 into the dehumidifier cabinet 100 and the temperature and humidity of the room are detected by the temperature sensor 3 and the humidity sensor 4, after which the room air A is dehumidified by the dehumidification means 5 and becomes the dry air B, which is blown out into the room from the air outlet port 103.

Also, when the operation start of a dry mode of the washing, which is an object to be dried, is detected, the control circuit 7 drives the wind direction changing means 1 to enable air to be blown through the air outlet port 103, drives the fan motor 2a to rotate the blowing fan 2, and drives the dehumidifying means 5 as described above. Thereafter, the control circuit 7 reads the humidity in the room from the room air A taken in the dehumidifier cabinet 100 via the humidity sensor 4, and judges whether or not the humidity is higher than a predetermined humidity. If the humidity in the room is higher than the predetermined humidity, the control circuit 7 controls the fan motor 2a and the wind direction changing means 1 so that the dehumidifying capability of the dehumidifying means 5 is at the maximum until the humidity in the room reaches the predetermined humidity. When the humidity in the room is decreased to the predetermined humidity by the control of the control circuit 7, the control circuit 7 identifies the arrangement range of the washing by using the infrared ray sensor 6, and controls the longitudinal direction changing motor 1c and the lateral direction changing motor 1d to direct the louvers 1a and 1b to the direction of the washing so that the dry air B hits the arrangement range. The predetermined humidity is a humidity set in advance according to the temperature in the room, and is set in the control circuit 7 as data.

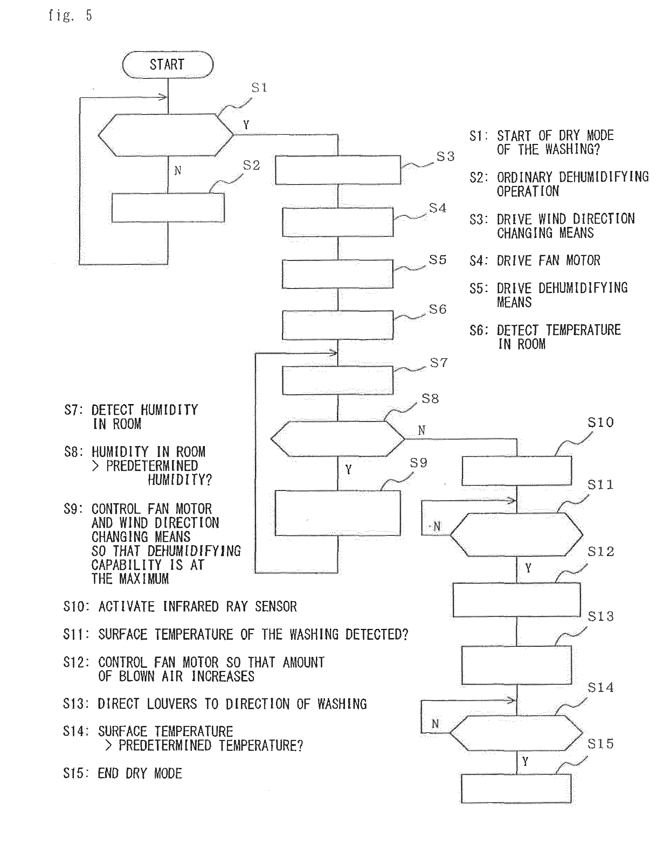

Next, the action at the time when the dry mode is selected is explained with reference to Figure 5.
Figure 5 is a flowchart showing the action at the time when the mode of the dehumidifier in accordance with this embodiment is the dry mode. The description of the action for the "ordinary dehumidifying operation" shown in S2 in Figure 5 is omitted because having been set forth before.

When the control circuit 7 of the dehumidifier detects that the dry mode of the washing has been selected (S1), the control circuit 7 drives the wind direction changing means 1 to allow air to be blown out through the air outlet port 103 (S3), drives the fan motor 2a to rotate the blowing fan 2 (S4), and drives the dehumidifying means 5 (S5). The room air A is taken in the dehumidifier cabinet 100 through the air intake port 101 by the rotation of the blowing fan 2, the water contained in the room air A is removed by the dehumidifying means 5, and the dry air B is blown out through the air outlet port 103. At this time, the control circuit 7 reads the temperature in the room detected by the temperature sensor 3 (S6), and also reads the humidity in the room detected by the humidity sensor 4 (S7). Then, the control circuit 7 recognizes the predetermined humidity set with respect to the read temperature in the room, and compares it with read humidity in the room (S8).

When judging that the humidity in the room is higher than the predetermined humidity, the control circuit 7 controls the fan motor 2a and controls the longitudinal direction changing motor 1c and the lateral direction changing motor 1d of the wind direction changing means 1 so that the dehumidifying capability of the dehumidifying means 5 is at the maximum (S9). In this case, the control circuit 7 carries out the control so that among "weak", "medium", and "strong" of the operation of the blowing fan 2, the air blowing amount at the time of "medium" is obtained, and also the variable angles in the vertical direction of the longitudinal louver 1a and in the horizontal direction of the lateral louvers 1b are at the maximum, and regulates the variable speed.

Subsequently, the control circuit 7 reads the humidity in the room again via the humidity sensor 4 (S7), and compares the read humidity with the predetermined humidity (S8). If the humidity in the room is higher than the predetermined humidity, the control circuit 7 maintains the above-described control (S9). During the time when repeatedly performing the actions in S7 to S9, when the control circuit 7 detects that the humidity in the room decreases to the predetermined humidity, the control circuit 7 activates the infrared ray sensor 6 (S 10). Then, the control circuit 7 judges whether or not the washing is detected from the surface temperature detected by the infrared ray sensor 6 (S11). As described above, the detection range (the whole scanning range 200) of the surface temperature detected by the infrared ray sensor 6 is almost equal to the direction of the dry air B changed by the longitudinal louver 1a and the lateral louvers 1b, and the surface temperature of the whole region in the range in which the louvers 1a and 1b can blow air is detected.

If the surface temperature of the washing is detected via the infrared ray sensor 6, the control circuit 7 controls the fan motor 2a so that the amount of air blown by the blowing fan increases (S12), and controls the longitudinal direction changing motor 1c and the lateral direction changing motor 1d so that the longitudinal louver 1a and the lateral louvers 1b face the arrangement range of the washing detected via the infrared ray sensor 6 (S 13). Thereby, the dry air B sent through the air outlet port 103 is blown out in the direction of the washing. The judgment on the surface temperature of the washing using the infrared ray sensor 6 is made by detecting the surface temperature of each of the divided areas 201 obtained by dividing the whole scanning range 200 of the infrared ray sensor 6 into plural numbers.

After the louvers 1a and 1b have been directed to the arrangement range of the washing, the control circuit 7 compares the surface temperature of the arrangement range with a predetermined temperature (drying temperature) (S 14). If the surface temperature is lower than the predetermined temperature, the above-described control is maintained. If the surface temperature becomes higher than the predetermined temperature on account of the maintenance of the control, the control circuit 7 stops the drive of the dehumidifying means 5, stops the drive of the fan motor 2a, stops the drive of the wind direction changing means 1, and gives notice of this state by using a buzzer or the like, thereby ending the dry mode (S 15).

Also, when the wind direction changing means 1, the fan motor 2a, and the dehumidifying means 5 are driven by the detection of the dry mode, if the humidity in the room detected by the humidity sensor 4 is not higher than the predetermined humidity, the control transfers from S8 to S10, and the control circuit 7 performs the above-described action.

As described above, according to this embodiment, at the time of dry mode of the washing, the dehumidifier is operated to take the room air A in the dehumidifier cabinet 100 and to detect the humidity in the room. If the humidity in the room is higher than the predetermined humidity, the fan motor 2a and the wind direction changing means 1 are controlled so that the dehumidifying capability of the dehumidifying means 5 is at the maximum. When the humidity in the room is decreased to the predetermined temperature by the control, the identification of the arrangement range of the washing using the infrared ray sensor 6 is started. Thereby, the humidity in the air in the room is decreased, and therefore, the difference between the surface temperature of the washing detected by the infrared ray sensor 6 and the surface temperature in the room at the periphery thereof becomes clear, so that the arrangement range of the washing can be identified exactly. When the arrangement range of the washing is identified, the louvers 1a and 1b are directed so that a large amount of the dry air B is blown out to the direction of the arrangement range. Therefore, the washing can be dried efficiently.

In this embodiment, the configuration is such that at the time of dry mode of the washing, the dehumidifier is operated to take the room air A in the dehumidifier cabinet 100 and to detect the humidity in the room, and if the humidity in the room is higher than the predetermined humidity, the dry air B is blown out toward the interior of the room. However, the configuration is not limited to this one. For example, the configuration may be such that a heater, which is a heating means, is provided in the dehumidifier cabinet 100, and if the humidity in the room is higher than the predetermined humidity as in the above-described configuration, the heater is energized to allow warm wind to be blown out through the air outlet port 103. Thereby, the humidity in the room can be decreased more rapidly, and the arrangement range of the washing can be identified more exactly by using the infrared ray sensor 6 than in the case of this embodiment.

### Industrial Applicability

The present invention can be applied to a dehumidifier for eliminating moisture in a room and, more particularly, to a dehumidifier having a function of drying the washing, which is an object to be dried, that is hung to dry in the room.

### Description of Symbols

1 wind direction changing means, 1a longitudinal louver, 1b lateral louvers, 1c longitudinal direction changing motor, 1d lateral direction changing motor, 2 blowing fan, 2a fan motor, 3 temperature sensor, 4 humidity sensor, 5 dehumidifying means, 6 infrared ray sensor, 6a infrared ray absorbing film, 6b thermistor, 7 control circuit, 100 dehumidifier cabinet, 101 air intake port, 102 water storage tank, 103 air outlet port, 200 whole scanning range, 201 divided area, A room air, B dry air

## Claims

1. A dehumidifier which comprises dehumidifying means which removes moisture contained in the air; and air blowing means which draws in room air and blows out dry air, which is obtained by causing the room air to pass through the humidifying means, into a room, comprising:
wind direction changing means which changes a blowing direction of the dry air;
humidity detection means which detects the humidity in the room;
surface temperature detection means which detects the surface temperature of an object to be dried in a non-contact state; and
control means which detects the dried state of the object to be dried from the surface temperature detected by the surface temperature detection means, and controls the wind direction changing means according the dried state;
wherein, before the surface temperature of the object to be dried is detected, the control means judges whether or not the humidity in the room is higher than a predetermined humidity, and if the humidity in the room is higher than the predetermined humidity, the control means controls at least the air blowing means so that the dehumidifying capability of the dehumidifying means is at the maximum until the humidity in the room reaches the predetermined humidity.

2. The dehumidifier according to claim 1, further comprising heating means;
wherein, until the humidity in the room reaches the predetermined humidity, the control means energizes the heating means to blow out warm air from the air blowing means so that the relative humidity in the room is decreased.

3. The dehumidifier according to claim 1 or 2, wherein, when the humidity in the room reaches the predetermined humidity, the control means controls the wind direction changing means so that the dry air hits the object to be dried.
